# EUROPEAN PATENT APPLICATION

(11) **EP 4 125 274 A1**
(43) Date of publication of application: **01.02.2023**
(21) Application number: 22173678.8
(22) Date of filing: 17.05.2022
(51) Int. Cl.: H04N 21/431, G06Q 30/02, H04N 21/443, H04N 21/466

(54) **METHOD AND APPARATUS FOR PLAYING VIDEOS**

(30) Priority: 26.07.2021 CN 202110844117
(71) Applicant: Beijing Dajia Internet Information Technology Co., Ltd., Beijing 100085 (CN)
(72) Inventor: WU, Xin, Beijing, 100085 (CN)
(74) Representative: Yang, Shu

(57) **Abstract**

Provided are a method and apparatus for playing videos, which relates to the field of computer technologies. The method includes: playing (201, 301) a first video; displaying (202, 302) a video viewing portal on a playback interface of the first video, wherein the video viewing portal is configured for viewing of videos related to the first video; switching (203, 303), in response to not detecting a trigger operation on the video viewing portal being detected within a first reference duration of time, the video viewing portal to a float window corresponding to a second video related to the first video; and playing (204) the second video in response to detecting a trigger operation on the float window.

## Description

### TECHNICAL FIELD

The present disclosure relates to the field of computer technologies, in particular relates to a method and apparatus for playing videos.

### BACKGROUND

With the development of computer technologies, watching videos has become a common way of entertainment. In order to enable the user to watch videos more conveniently, related videos may be recommended to the user who is watching a certain video, thereby allowing the user to watch the related video as recommended directly.

### SUMMARY

The present disclosure relates to a method and apparatus for playing videos and an electronic device.

According to some embodiments of the present disclosure, a method for playing videos is provided. The method includes:
playing a first video;
displaying a video viewing portal on a playback interface of the first video, wherein the video viewing portal is configured for viewing of videos related to the first video;
switching, in response to not detecting a trigger operation on the video viewing portal being detected within a first reference duration of time, the video viewing portal to a float window corresponding to a second video, wherein the second video is related to the first video; and
playing the second video in response to detecting a trigger operation on the float window.

According to some embodiments of the present disclosure, an apparatus for playing videos is provided. The apparatus includes:
a video playing unit, configured to play a first video;
a portal displaying unit, configured to display a video viewing portal on a playback interface of the first video, wherein the video viewing portal is configured for viewing of videos related to the first video;
a float window displaying unit, configured to switch, in response to not detecting a trigger operation on the video viewing portal being detected within a first reference duration of time, the video viewing portal to a float window corresponding to a second video, wherein the second video is related to the first video; and
the video playing unit, further configured to play the second video in response to detecting a trigger operation on the float window.

According to some embodiments of the present disclosure, an electronic device is provided. The electronic device includes:
one or more processors; and
a memory configured to store one or more instructions executable by the one or more processors;
wherein the one or more processors, when executing the one or more instructions, are caused to perform:
playing a first video;
displaying a video viewing portal on a playback interface of the first video, wherein the video viewing portal is configured for viewing of videos related to the first video;
switching, in response to not detecting a trigger operation on the video viewing portal being detected within a first reference duration of time, the video viewing portal to a float window corresponding to a second video, wherein the second video is related to the first video; and
playing the second video in response to detecting a trigger operation on the float window.

According to some embodiments of the present disclosure, a non-transitory computer-readable storage medium storing one or more instructions therein is provided. Wherein the one or more instructions, when executed by a processor of an electronic device, cause the electronic device to perform:
playing a first video;
displaying a video viewing portal on a playback interface of the first video, wherein the video viewing portal is configured for viewing of videos related to the first video;
switching, in response to not detecting a trigger operation on the video viewing portal being detected within a first reference duration of time, the video viewing portal to a float window corresponding to a second video, wherein the second video is related to the first video; and
playing the second video in response to detecting a trigger operation on the float window.

### BRIEF DESCRIPTION OF THE DRAWINGS

FIG. 1 is a schematic diagram of an implementation environment according to some embodiments;
FIG. 2 is a flowchart of a method for playing videos according to some embodiments;
FIG. 3 is a flowchart of another method for playing videos according to some embodiments;
FIG. 4 is a schematic diagram showing a process for playing videos according to some embodiments;
FIG. 5 is a schematic diagram showing a process for moving a float window according to some embodiments;
FIG. 6 is a schematic diagram showing a process for playing videos according to some embodiments;
FIG. 7 is a schematic diagram for displaying a return control according to some embodiments of the present disclosure;
FIG. 8 is a schematic diagram showing a process for playing videos according to some embodiments;
FIG. 9 is a schematic diagram showing a process for enlarging a float window according to some embodiments;
FIG. 10 is a schematic diagram showing a process for shrinking a float window according to some embodiments;
FIG. 11 is a flowchart of another method for playing videos according to some embodiments;
FIG. 12 is a block diagram of an apparatus for playing videos according to some embodiments;
FIG. 13 is a block diagram of another apparatus for playing videos according to some embodiments;
FIG. 14 is a structural block diagram of a terminal according to some embodiments; and
FIG. 15 is a structural block diagram of a server according to some embodiments.

### DETAILED DESCRIPTION

In the related art, a corresponding video portal may be displayed while playing a certain video. After the user triggers the video portal, the related video of the video may be displayed, and then played after the user clicks on the related video. However, during the aforesaid playing process, the user needs to trigger the video portal firstly before clicking on the related video, which is a cumbersome playing process for the user and has rather low efficiency in human-computer interaction.

It should be noted that the user information (including but not limited to user device information, user personal information, etc.) involved in the present disclosure may be information authorized by the user or fully authorized by all parties.

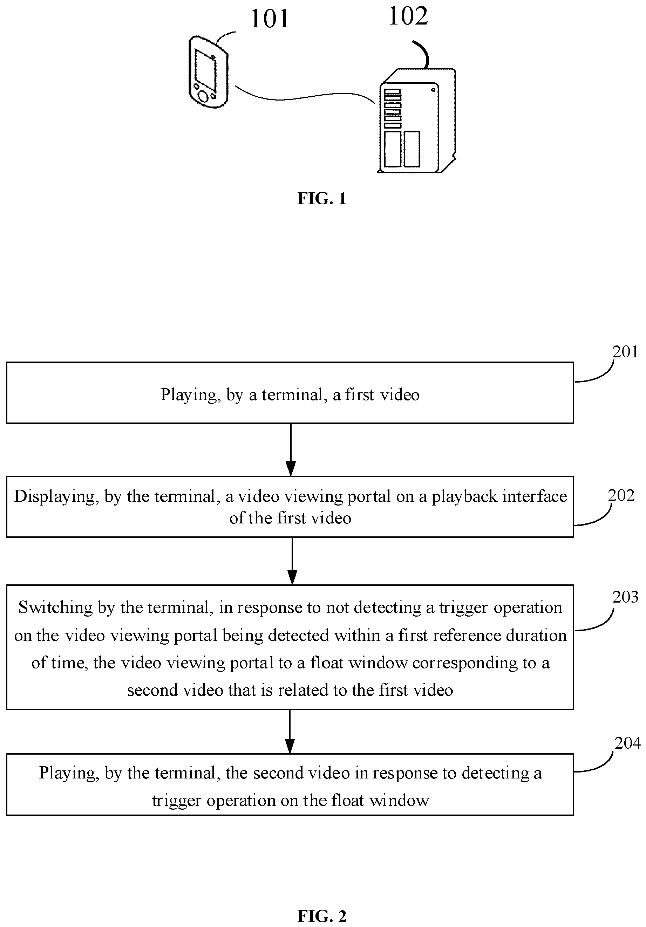

FIG. 1 is a schematic diagram of an implementation environment according to some embodiments. The implementation environment includes a terminal 101 and a server 102. The terminal 101 is connected to and interacts with the server 102 via a network connection.

The terminal 101 may be a portable, pocket-sized, handheld, or other types of terminals, such as a cell phone, a computer, a tablet PC, etc. The server 102 may be a server, or a server cluster consisting of a number of servers, or a cloud computing service center.

The terminal 101 is provided with a target application served by the server 102, and is capable of implementing functions such as video playing via the target application. In some embodiments, the terminal 101 may be a computer, a cell phone, a tablet computer, or other terminal. In some embodiments, the target application is a target application in the operating system of the terminal 101, or a target application provided by a third party. For example, the target application is a video application having a video playing function. The video application may further have other functions, such as a live-streaming function, a shopping function, a game function, etc. In some embodiments, the server 102 is a backend server for the target application or a cloud server that provides services such as cloud computing and cloud storage.

In some embodiments, the server 102 stores a plurality of videos, each having a related video. The two videos are related in the sense that the videos are of the same type, same author, or similar content. For the first video, the server 102 may send a first video and second videos related with the first video to the terminal 101, and the terminal, after playing the first video, may play the second video upon detecting a playing operation for the second video.

FIG. 2 is a flowchart of a method for playing videos according to some embodiments. As shown in FIG. 2, the method is applicable to the terminal and includes following steps 201-204.

In 201, the terminal plays a first video.

In 202, the terminal displays a video viewing portal on a playback interface of the first video.

The first video is any one video, and the video viewing portal is displayed on the playback interface of the first video while playing the first video. The video viewing portal is configured for viewing of videos related to the first video. The first video on the playback interface may be in a playing state or in a paused state.

In 203, the terminal switches the video viewing portal to a float window (or floating window) corresponding to a second video in response to no trigger operation on the video viewing portal being detected within a first reference duration. The second video is related to the first video.

When the user does not trigger the video viewing portal within the first reference duration, the terminal switches the video viewing portal to the float window corresponding to the second video. The first reference duration is any duration, and the second video, which is related to the first video, is displayed in the float window corresponding to the second video. There may be one or more second videos.

In 204, the terminal plays the second video in response to a trigger operation on the float window.

The trigger operation on the float window includes a clicking operation, a double-clicking operation, an enlarging operation or other operations on the float window. The terminal may play the second video in the float window, or play the second video in the playback interface.

In the method according to embodiments of the present disclosure, the video viewing portal for viewing the videos related to the first video is displayed firstly during the process of playing the first video. In the case that the user performs no operation on the video viewing portal within the first reference duration, the video viewing portal may be switched to a float window corresponding to the second video related to the first video, such that the second video may be played after the user triggers the float window. Thus, a new form of interaction is provided for the user, which simplifies the process of playing the second video and thereby improves the efficiency of human-computer interaction. In addition, the display fashion of switching between the video viewing portal and the float window provides the user with two ways to view the related video, which is not limited to a single form of interaction. Furthermore, the dynamic switching makes it easy to attract the user's attention, which prompts the user to trigger the float window for playing the video.

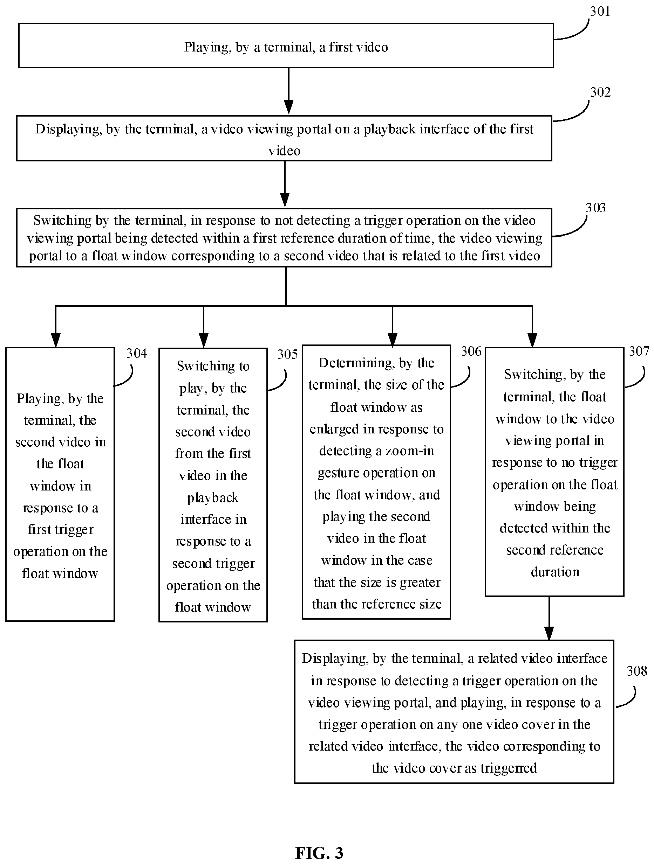

FIG. 3 is a flowchart of another method for playing videos according to some embodiments. As shown in FIG. 3, the method is applied in the terminal and includes following steps 301-308.

In 301, the terminal plays the first video.

The first video is any one video, and may for example be a food video, a beauty video, a game video or another video. The embodiments of the present disclosure do not limit the type, duration, and the like of the first video. The first video may be in the playing state or the pause state, and the embodiments of the present disclosure do not limit the playing state of the first video.

In some embodiments, the terminal is provided with a target application and plays the first video via the target application. For example, the target application may be a video playing application, a live-streaming application, or another type of application.

In some embodiments, the first video is a video acquired by the terminal from the server. The terminal sends a video acquiring request to the server, and the video acquiring request carries a video identification of the first video. The server sends the first video to the terminal in response to the video acquiring request, and the terminal plays the first video after acquiring the first video. In some other embodiments, the first video is a video recommended to the terminal by the server, the server determines a video list (i.e. feed stream) recommended to the terminal, the video list includes at least one video, and the first video is any video in the video list.

In 302, the terminal displays a video viewing portal on the playback interface of the first video.

Embodiments of the present disclosure are illustrated by taking an example in which the first video is played in the playback interface. During the process of playing the first video, the playback interface includes a video viewing portal in addition to the first video as played in the playback interface. The video viewing portal is configured for viewing of the videos related to the played video. That is, in the case that the first video is played in the playback interface, the video viewing portal is configured for viewing of the videos related to the first video, and in the case that the video played in the playback interface is switched to another video, the video viewing portal is configured for viewing of the videos related to the another video. The videos relate to the first video includes videos of the same video type as the first video, videos of the same video author as the first video, or videos similar to the video content of the first video.

In some embodiments, the video viewing portal may be disposed at any position of the playback interface, and may for example be disposed in the lower right corner, the upper right corner, or other positions of the playback interface.

In some embodiments, the video viewing portal includes a portal icon and portal copywriting (or copyright information). The portal copywriting is configured to describe the functionality of the video viewing portal, and may for example be "Related videos" or "Similar videos". The portal icon is either a static icon or a dynamic icon. In some cases, "control" can refer to a user interface control that may allow the user to select or perform a particular action.

In some embodiments, the terminal further displays in the playback interface the video copywriting, the like control, the number of likes, the comment control, the number of comments, and the forward control corresponding to the first video, and also displays the user account releasing the first video and the avatar corresponding to the user account, and the like. The video copywriting is configured to describe the first video, and the first video may be liked by triggering the like control, commented by triggering the comment control, and forwarded by triggering the forward control.

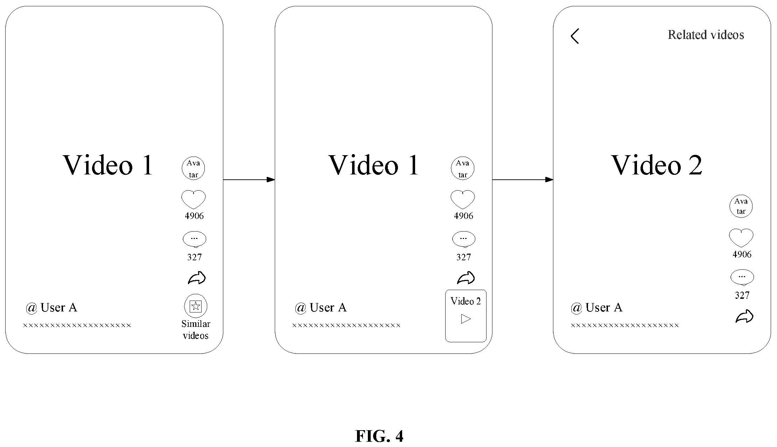

For example, referring to the playback interface shown in FIG. 4, a video 1 released by user A is played in the playback interface. The video copywriting "××××××××××××××××××××" corresponding to the video 1 is displayed at the bottom of the playback interface. On the right side of the playback interface, the avatar of user A, the like control, the number of likes 4906, the comment control, the number of comments 327 and the forward control corresponding to the video 1, and the video viewing portal including the icon and the "Similar videos" are displayed sequentially.

In embodiments of the present disclosure, after the terminal displays the video viewing portal, step 303 is executed in response to no trigger operation on the video viewing portal being detected within the first reference duration. The terminal displays the related video interface in response to detecting the trigger operation on the video viewing portal within the first reference duration, and plays, in response to the trigger operation on the any video cover in the related video interface, the video corresponding to the video cover as triggered. The detailed playing process is shown in step 308 below and will not be repeated here.

In 303, the terminal switches the video viewing portal to a float window corresponding to a second video in response to no trigger operation on the video viewing portal being detected within a first reference duration. The second video is related to the first video.

The first reference duration is any duration and may for example be 5 seconds, 10 seconds or other duration, and there may be one or more second videos.

In some embodiments, the case where the second video is related to the first video may include following situations. The first video and the second video may have the same type, and may for example both be the food videos. Or, the first video and the second video are videos released by the same publisher, and may for example both be released by user A. Or, the similarity between the first video and the second video is greater than a reference similarity, the similarity referring to the similarity in the video content between the first video and the second video. For example, the reference similarity may be 60%, and the similarity between the first video and the second video may be 80%. The similarity between the first video and the second video may be acquired by invoking the neural network model to process the first video and the second video, or may be acquired by other fashions. Embodiments of the present disclosure do not limit the fashion of acquiring the similarity.

In some embodiments, the float window is configured for playing of the second video, and includes a playback control corresponding to the second video. The terminal may subsequently play the second video in the float window in response to the trigger operation on the playback control.

In some embodiments, when a plurality of second videos are present, the float window includes a plurality of playback regions, each of the playback regions being configured for playing of a corresponding second video. Therefore, the terminal plays a second video in each of the playback regions in response to a trigger operation on the float window.

In some embodiments, the case where the terminal switches the video viewing portal to the float window corresponding to the second video indicates that the terminal cancels the display of the video viewing portal and displays the float window at the position where the video viewing portal is displayed. That is, the float window is displayed at the same position as the video viewing portal. Alternatively, the float window may be displayed at a different position with the video viewing portal, and embodiments of the present disclosure do not limit the position where the video viewing portal and the float window are displayed.

For example, referring to the playback interface shown in FIG. 4, the video viewing portal in the bottom right corner of the playback interface is switched to the float window.

In some embodiments, while displaying the float window, the terminal displays a video cover of the second video in the float window, and the video cover is a video cover set by the publisher of the second video, or any video frame in the second video.

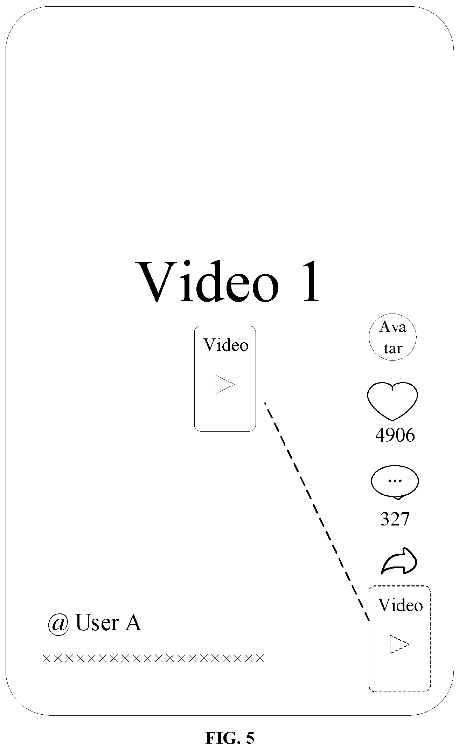

In some embodiments, the float window is draggable, and in response to a drag operation on the float window, the terminal moves the float window from a first position to a second position on the playback interface, the second position being different from the first position. For example, referring to FIG. 5, the float window is moved from the lower right corner to the middle position along the dragging track shown by the dashed line on the playback interface.

In some embodiments, the server stores a relationship corresponding to the first video, and the relationship includes a video identification of the first video and video identifications of videos related to the first video. When the terminal acquires the first video from the server, the server determines a plurality of videos related to the first video based on the relationship corresponding to the first video, and then returns the first video and at least one second video related to the first video to the terminal. The at least one second video is all or portions of the plurality of videos related to the first video. Afterwards, the terminal switches the video viewing portal to the float window corresponding to the at least one second video in response to no trigger operation on the video viewing portal being detected within the first reference duration, the float window including the video cover of the at least one second video. In some embodiments, in a case of displaying one second video in the float window, when the similarity between the first video and the plurality of videos sent by the server to the terminal is greater than the reference similarity, the terminal selects the second video with the greatest similarity from the plurality of videos based on the similarity extent and then displays the second video with the greatest similarity in the float window.

Alternatively, the terminal may firstly acquire the first video from the server. Then, during the process of playing the first video, the terminal may send a related-video acquiring request, which carries the video identification of the first video, to the server in response to no trigger operation on the video viewing portal being detected within the first reference duration. When the server stores the relationship corresponding to the first video, the server may determine, in response to the related-video acquiring request, at least one second video related to the first video based on the relationship, sends the at least one second video to the terminal, and switches the video viewing portal to the float window corresponding to the at least one second video. Alternatively, the server may acquire and send the second video related to the first video to the terminal in real time in response to the related-video acquiring request. In some embodiments, the server may acquire and send videos of the same type as the first video to the terminal based on the video type of the first video, or may acquire and send other videos of the same publisher to the terminal based on the publisher of the first video, or may determine the similarity between the first video and other videos and then send the video having a greater similarity with the first video than the reference similarity to the terminal.

In embodiments of the present disclosure, after the terminal displays the float window, the user performs different operations on the float window, and the terminal plays the second video with the corresponding playing method in response to the operations performed by the user. When the user performs a first trigger operation on the float window, the terminal performs step 304; when the user performs a second trigger operation on the float window, the terminal performs step 305; when the user performs a zoom-in gesture operation on the float window, the terminal performs step 306; and when the user performs no operation on the float window within the second reference duration, the terminal performs step 307.

In 304, the terminal plays a second video in the float window in response to a first trigger operation on the float window.

The first trigger operation may be a clicking operation, a double-clicking operation, a slide operation or other operations. The embodiments of the present disclosure are illustrated by taking the clicking operation as an example of the first trigger operation. After the user clicks on the float window, the terminal plays the second video in the float window in response to the clicking operation as detected. For the user, the second video may be played in the float window directly by triggering the float window, which simplifies the process of playing the second video and improves the efficiency of human-computer interaction.

In embodiments of the present disclosure, the playing of the first video in the playback interface and the playing of the second video in the float window do not affect each other. The first video and the second video may be played simultaneously, which means that the first video and the second video may be played in the form of picture-in-picture. Furthermore, the first video and the second video both support click-to-play or click-to-pause interaction. For example, when the terminal plays the first video in the playback interface and the second video in the float window, the first video is paused in response to the pause operation on the first video, whereas the second video is still played at this point; or the second video is paused in response to the pause operation on the second video, whereas the first video is still played at this point.

In some embodiments, when a plurality of second videos are present, the terminal may play the plurality of second videos in turn in the float window in response to a first trigger operation on the float window. That is, after one of the second videos has been played, the next second video may be played immediately until the plurality of second videos are all played, and then the first one of the second videos may be played again after all the plurality of second videos has been played. The order in which the plurality of second videos are played may be arranged according to the similarity between the second video and the first video, or may be random, which is not limited in embodiments of the present disclosure. Alternatively, in a case where one second video is present, the terminal plays the second video on repeat in the float window in response to the first trigger operation on the float window.

This fashion of playing videos in turn is not only limited to playing one video, but allows to play a plurality of videos in the float window without requiring the user to manually switch to the next related video, which further improves the efficiency of human-computer interaction.

In some embodiments, in a case where a plurality of second videos are present and the float window includes a plurality of playback regions, the terminal may play one second video in each of the playback regions in response to a first trigger operation on the float window, which allows the user to watch a plurality of related videos simultaneously, and thereby improves the efficiency of playing related videos. In some embodiments, the terminal may control the playback of the second video in each of the playback regions separately, which means that each playback region corresponds to one playback control, or the playback of the second video in each playback region may be controlled simultaneously, which means that the plurality of playback regions corresponds to a same playback control.

In some embodiments, the terminal, in response to a trigger operation on any one playback region, plays the second video within the playback region as triggered in the float window. That is, the terminal may enlarge any one playback region to play the second video within the playback region in the float window, and stop playing other second videos. When the plurality of related videos is played simultaneously, the user may trigger the related video as desired to watch the related video in the float window, thereby allowing a more flexible fashion for playing the related video. Moreover, the user can easily select the related video as desired when the plurality of related videos is played simultaneously, and the user has no necessity to select the related video as desired by switching between the plurality of related videos, thereby further improving the efficiency of human-computer interaction.

In some embodiments, the number of playback regions in the float window is fixed. For example, the float window may be divided from the middle and divided into two playback regions; or the float window may be divided as three equal parts and divided into three playback regions. Alternatively, the number of playback regions in the float window is determined according to the number of second videos. For example, in the case that there are three second videos, the float window is divided into three playback regions, and in the case that there are five second videos, the float window is divided into five playback regions.

It is noted that step 304 is optional, and the terminal may still perform at least one of steps 305, 306 or 307 without performing step 304.

In 305, the terminal switches to play the second video from the first video in the playback interface in response to the second trigger operation on the float window.

The second trigger operation may be a clicking operation, a double-clicking operation, a slide operation or other operations, and the second trigger operation is different from the first trigger operation. The embodiments of the present disclosure are illustrated by taking the double-clicking as an example of the second trigger operation. After the user double-clicks on the float window, the terminal, in response to the double-clicking operation as detected, firstly cancels the playback of the first video and then plays the second video in the playback interface. For example, referring to FIG. 4, the user double-clicks the float window in the playback interface to play video 2 in the playback interface. The second video may be played in the playback interface directly after the user triggers the float window, which simplifies the process of playing the second video and improves the efficiency of human-computer interaction.

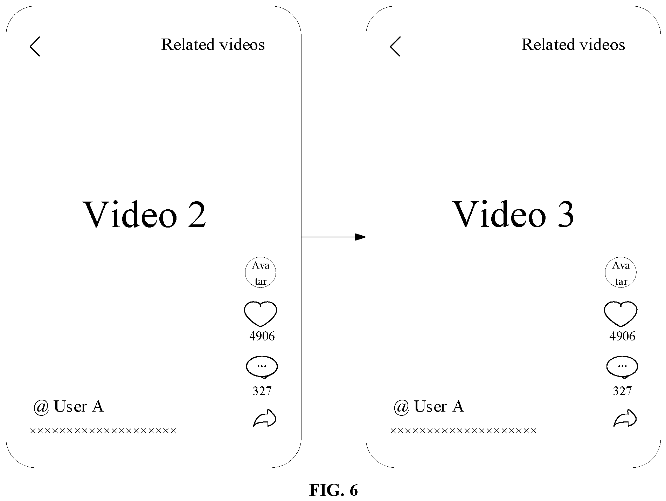

In some embodiments, in a case where a plurality of second videos are present, the terminal, after playing any one second video in the playback interface, may also switch the second video to other second videos. That is, the terminal continues to play the next second video in the playback interface in response to the slide operation on the second video as played currently. For example, referring to FIG. 6, the user slides up the video 2 to play the video 3 related to the first video in the playback interface. After playing any one second video, the terminal may directly play other second videos related to the first video based on the user's slide operation, which eliminates the necessity to reacquire the second video related to first video for playback by returning to the playback interface of the first video, thereby simplifying the user's operation and improving the efficiency of human-computer interaction.

In some embodiments, while determining the second video related to the first video based on the similarity, the terminal plays the plurality of second videos in an order of similarity to the first video from greatest to smallest. The terminal may firstly play the second video having the greatest similarity to the first video, and later, in response to a slide operation on the second video as played currently, plays another second video, the similarity between the another second video and the first video being less than the similarity between the second video as played currently and the first video.

In some embodiments, referring to FIG. 4, when the terminal plays the second video in the playback interface, "Related videos" is displayed in the upper right corner of the playback interface to indicate the user that the video as played currently is a related video of other videos. A first return control corresponding to the first video is displayed in the upper left corner of the playback interface. After the user triggers the first return control, the terminal switches to play the first video from the second video in the playback interface in response to the trigger operation on the first return control. That is, the terminal returns to the original feed stream where the first video is disposed and continues to play the first video within the original feed stream in the playback interface. The terminal displays the first return control, which allows the user to trigger the first return control at any time to return to play the first video, thereby allowing a more flexible fashion for playing the videos.

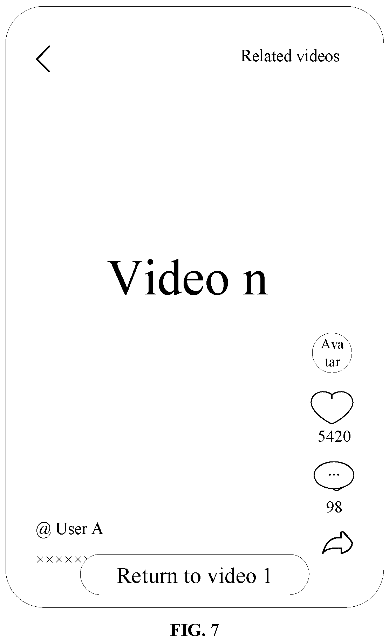

In another embodiment, in a case where a plurality of second videos are present, the terminal may play the plurality of second videos in the playback interface, play other second videos in response to a slide operation on the second video as played currently, and display a second return control on the playback interface while playing to the last second video of the plurality of second videos. The second return control as displayed may indicate the user that the related videos of the first video have been played and ask whether to return to play the first video, and in the case that the user wants to return to the first video, the user may trigger the second return control directly to return to play the first video. The second return control may be displayed anywhere on the playback interface, which is not limited in embodiments of the present disclosure. For example, referring to FIG. 7, the second return control "Back to Video 1" is displayed below the last second video "Video n".

In some embodiments, the user triggers the second return control, and the terminal plays the first video in the playback interface in response to the trigger operation on the second return control. The first video may be played from the beginning or continued from the last playback time point. Alternatively, the user further performs the slide operation on the last second video, and the terminal, in response to the slide operation on the last second video, plays the next video corresponding to the first video in the playback interface. That is, during the process of playing the plurality of second videos in the playback interface, when the playback of the plurality of second videos is finished, the video after the first video in the original feed stream may be further played in the current feed stream by sliding the second video. The fashion in which the next video corresponding to the first video is further played in the current playback interface allows to play the next video without returning to the first video firstly, which improves the efficiency of human-computer interaction.

The first return control and the second return control are both for instructing to return to play the first video in the original feed. The difference may merely lie in that the first return control is displayed directly in the playback interface after switching from the first video to the second video. That is, the first return control is always present when playing any second video, whereas the second return control is only displayed when playing the last second video.

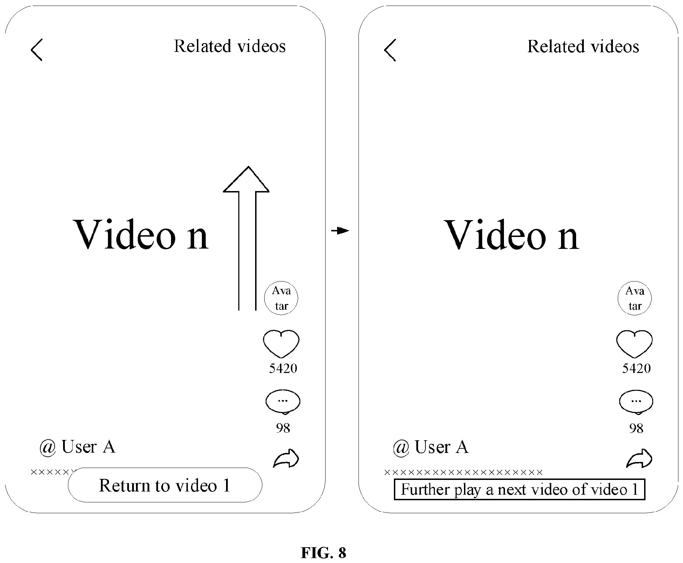

In some embodiments, when the user continues to slide the last second video, the terminal displays a prompt message for prompting the user that the next video corresponding to the first video will be played continuously. For example, referring to FIG. 8, while playing to the last second video "Video n", "Back to video 1" may be displayed below "Video n", and in the case that the user continues to slide down "Video n", a prompt message "Further play a next video of video 1" is displayed below.

It should be noted that the last second video may be the last second video as played based on the slide down operation of the user, or the last second video as played based on the slide up operation of the user. In the case that the last second video is the last second video as played based on the slide down operation of the user, the video as played while continuing the slide down operation is the next video in the video list whiling sliding down the first video, and in the case that the last second video is the last video as played based on the slide up operation of the user, the video as played while continuing the slide up operation is the next video in the video list whiling sliding up the first video.

In addition, embodiments of the present disclosure do not limit whether the video viewing portal or float window is displayed on the playback interface of the second video. In some embodiments, when the terminal plays the second video in the playback interface, the video viewing portal or the corresponding float window is not displayed on the playback interface as for example shown in FIG. 4. Alternatively, when the terminal plays the second video in the playback interface, the video viewing portal or the corresponding float window is displayed on the playback interface.

It should be noted that, in embodiments of the present disclosure, when a plurality of second videos is played in the playback interface, the form of interaction corresponding to the plurality of second videos is the same as the form of interaction corresponding to the first video, and the next or previous second video may be played by sliding the second video as played currently.

It is noted that step 305 is optional, and the terminal may still perform at least one of steps 304, 306 or 307 without performing step 305.

In 306, the terminal, in response to detecting a zoom-in gesture operation on the float window, determines the size of the float window as enlarged and plays the second video in the float window in the case that the size is greater than the reference size.

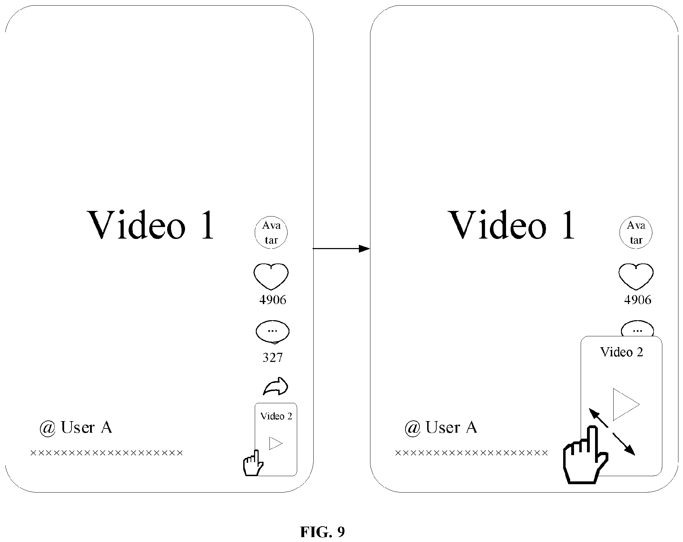

In embodiments of the present disclosure, after the terminal enlarges the float window to the reference size, the second video is automatically played in the float window, which eliminates the need of the user's manual triggering for playing the second video, thereby simplifying the user's operation and improving the efficiency of human-computer interaction. The zoom-in gesture operation is a two-finger enlarging operation, and the float window may be, for example as shown in FIG. 9, enlarged gradually when two fingers perform the sliding in the direction shown by the arrow. Alternatively, the zoom-in gesture operation is a stretching operation on the border of the float window. That is, the float window may be enlarged gradually when the finger long-presses the border of the float window and moves in either direction beyond the float window. Alternatively, the zoom-in gesture operation may be other operations, and the embodiments of the present disclosure do not limit the operation mode of the zoom-in gesture operation. The size of the float window as enlarged herein does not exceed the size of the playback interface.

In some embodiments, the user may first drag the float window and then perform the zoom-in gesture operation on the float window as dragged. Alternatively, the user may perform the zoom-in gesture on the float window and then drag the float window as enlarged.

In some embodiments, determining the size of the float window as enlarged by the terminal includes determining the width of the float window as enlarged, and/or determining the height of the float window as enlarged. Accordingly, the size greater than the reference size includes following cases in which the width as enlarged is greater than a reference width, and/or the height as enlarged is greater than a reference height. That is, the terminal plays the second video in the float window in the case that the width as enlarged is greater than the reference width or in the case that the height as enlarged is greater than the reference width; or the terminal plays the second video in the float window in the case that the width as enlarged is greater than the reference width and the height as enlarged is greater than the reference width. For example, the second video may be automatically played in the float window by enlarging the height of the float window to one-third of the height of the playback interface.

The fashion in which the terminal plays the second video in the float window in the case that the size is greater than the reference size is optional. In another embodiment, in the case that the size as enlarged is not greater than the reference size, the terminal may play the second video in the float window in response to a trigger operation on a play control corresponding to the second video. In other words, after enlarging the float window, the terminal may do not play the second video automatically in the case that the size of the float window is not greater than the reference size, and may play the second video only when the user manually triggers the play control. In embodiments of the present disclosure, various fashions are provided to the user to play the second video, such that the user may perform the corresponding operation to play the second video regardless of the situation.

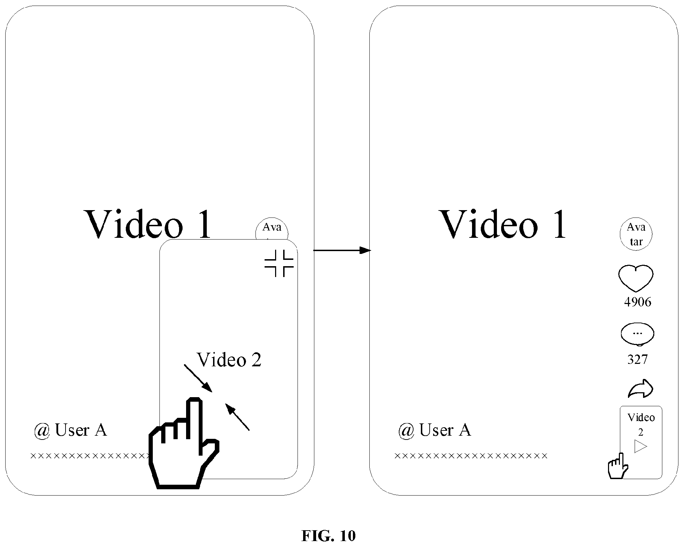

In another embodiment, after enlarging the float window, the terminal may then shrink the float window. In response to detecting the zoom-out gesture operation on the float window, the terminal may shrink the float window gradually to the original size, thereby avoid affecting the user's viewing of the first video. The zoom-out gesture operation is a two-finger shrinking operation, and the two fingers may for example as shown in FIG. 10 slide in the direction shown by the arrow to gradually shrink the float window. Alternatively, the zoom-out gesture operation is a stretching operation on the border of the float window. That is, the finger long-presses the border of the float window and moves in the direction towards the float window to gradually shrink the float window. Alternatively, the zoom-out gesture operation may be other operations, and the embodiments of the present disclosure do not limit the operation mode of the zoom-out gesture operation.

Alternatively, the terminal, in response to the trigger operation on the restore control in the float window, restores the float window to its original size, which eliminates the need to gradually shrink the float window and improves the operation efficiency. For example, referring to FIG. 10, the restore control is displayed in the upper right corner of the float window as enlarged, and the user clicks on the restore control to directly restore the float window to its original size.

In some embodiments, after the terminal shrinks the float window to its original size, step 307 is executed in response to no trigger operation on the float window being detected within the second reference duration; and the corresponding operation is executed in response to the trigger operation on the float window being detected within the second reference duration.

It should be noted that the window as shown after switching the video viewing portal in the present disclosure is not limited to the form of a float window, and may be a window embedded in the playback interface, or in other forms as long as the same function with the float window in the aforesaid embodiments can be achieved.

It shall be noted that the playback of the second video in the float window as enlarged does not affect the playback of the first video.

It shall be further noted that step 306 is optional, and the terminal may still perform at least one of steps 304, 305 or 307 without performing step 306.

It shall be further noted that step 306 is merely illustrated by taking an example in which one second video is played in the float window. In another embodiment, the aforesaid embodiments regarding performing gesture operation is also applicable to the case of playing a plurality of second videos in the float window. That is, when the float window includes a plurality of playback regions and one second video is played in each playback region, the playback region in the float window is enlarged in equal proportion while enlarging the float window, and in the case that the size of the float window as enlarged is greater than the reference size, the second video is automatically played in each playback region.

In 307, the terminal switches the float window to the video viewing portal in response to no trigger operation on the float window being detected within the second reference duration.

In embodiments of the present disclosure, the terminal may switch the video viewing portal to the float window, or may switch the float window back to the video viewing portal. In other words, the terminal continuously detects whether the user triggers the float window or the video viewing portal, and performs the switching when the detecting result meets the switching condition. That is, while displaying the video viewing portal, the terminal switches the video viewing portal to the float window in response to no trigger operation on the video viewing portal being detected within the first reference duration, and while displaying the float window, the terminal switches the float window back to the video viewing portal in response to no trigger operation on the float window being detected within the second reference duration. Such a switching fashion allows the user to select any way for viewing the related video, which provides various ways to view the related video and enriches the form of interaction. This switching fashion can also attract the user to watch related videos, thereby increasing the number of views, the times of user visits and the number of daily active users of the video live-streaming platform.

The second reference duration may be any duration, and be the same as or different from the first reference duration. For example, the second reference duration may be 10 seconds, 15 seconds, 20 seconds, or other duration.

It is shall be further noted that the terminal, after switching the float window to the video viewing portal, switches the video viewing portal to the float window corresponding to a fifth video related to the first video in response to no trigger operation on the video viewing portal is detected within the first reference duration. This fifth video may be the same or different from the second video.

It is shall be further noted that step 307 is optional, and the terminal may still perform at least one of steps 304, 305 or 306 without performing step 307.

In 308, the terminal displays the related video interface in response to detecting a trigger operation on the video viewing portal, and plays, in response to a trigger operation on any one video cover in the related video interface, the video corresponding to the video cover as triggered.

The related video interface includes video covers for a plurality of videos related to the first video.

In some embodiments, the terminal may jump from the playback interface to the related video interface, and no longer display the playback interface at this point. Alternatively, the related video interface may pop up from the bottom of the playback interface, or the related video interface may be displayed in other forms, which is not limited in embodiments of the present disclosure.

In some embodiments, the terminal displays video covers of a plurality of videos related to the first video in the related video interface. Then, the user selects a video cover from the plurality of video covers and clicks on the video cover as selected, such that the terminal plays the video corresponding to the video cover. This fashion of displaying the related video interface facilitates the user to select and watch any video as desired from the plurality of videos, and is not limited to merely playing the video in the float window.

It should be noted that the embodiments of the present disclosure are illustrated only by taking an example in which the video related to the first video is played after displaying the related video interface. In another embodiment, after displaying the related video interface, the terminal may return to the playback interface of the first video without playing the video related to the first video.

Furthermore, in another embodiment, in a case where the terminal plays the first video and the float window is displayed on the playback interface of the first video, the terminal may switch the first video to the third video in response to the slide operation on the playback interface, and display the float window corresponding to the fourth video on the playback interface of the third video, the fourth video being related to the third video. When switching the first video, the terminal may correspondingly switch the float window in the playback interface to the float window corresponding to the video related to the third video, which eliminates the necessity to firstly display the video viewing portal corresponding to the third video before switching the video viewing portal to the float window, thereby improving the efficiency of human-computer interaction. Alternatively, in a case where the terminal plays the first video and the video viewing portal is displayed on the playback interface of the first video, the terminal switches the first video to the third video in response to a slide operation on the playback interface, and displays the video viewing portal on the playback interface of the third video, the video viewing portal being configured for viewing of the videos related to the fourth video.

That is, when the terminal plays the first video, in the case that the first video is switched to another video which is not a video related to the first video, the terminal switches the float window as displayed on the playback interface to the float window corresponding to the video related to the another video, or switches the video viewing portal to the video viewing portal for viewing the video related to the another video.

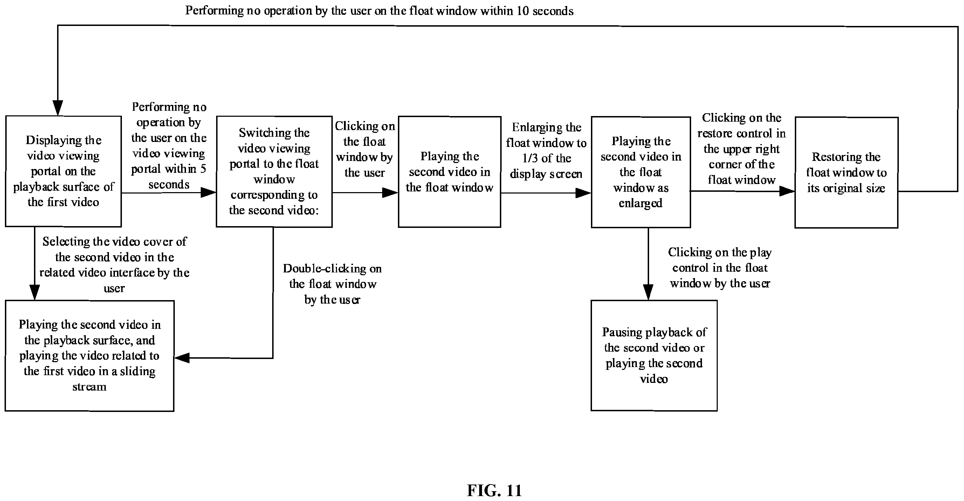

In some embodiments, the method for playing videos according to the present disclosure is illustrated by another form of flow chart. For example, referring to FIG. 11, the terminal displays the video viewing portal on the playback interface of the first video, and in the case that the user performs no operation on the video viewing portal within 5 seconds, the terminal switches the video viewing portal to the float window corresponding to the second video. Afterwards, in one possible implementation, the user may click on the float window, and the terminal may play the second video in the float window, enlarge the float window to 1/3 of the display screen, and play the second video in the float window as enlarged. Then, the user may click on the play control in the float window to pause the playing of the second video, or continue to click on the play control to continue playing the second video, or click on the restore control in the upper right corner of the float window to activate the terminal to restore the float window to its original size. Then, in the case that the user performs no operation on the float window within 10 seconds, the video viewing portal is displayed on the playback interface. In another possible implementation, the user may double-click on the float window, or the user trigger the video viewing portal and select the video cover of the second video in the related video interface, the second video may be played in the playback interface, the terminal plays the next second video based on the slide operation of the user, thereby playing the video related to the first video in the form of a sliding stream.

It should be noted that, in the aforesaid embodiments, the terminal may pause the video or continue to play the video in response to the user's clicking operation no matter whether the video is played in the playback interface or in the float window.

In the method according to embodiments of the present disclosure, the video viewing portal for viewing the video related to the first video is displayed firstly during the process of playing the first video. In the case that the user performs no operation on the video viewing portal within the first reference duration, the video viewing portal may be switched to a float window corresponding to the second video related to the first video, such that the second video may be played after the user triggers the float window. Thus, a new form of interaction is provided for the user, which simplifies the process of playing the second video and thereby improves the efficiency of human-computer interaction. In addition, the display fashion of switching between the video viewing portal and the float window provides the user with two ways to view the related video, which is not limited to a single form of interaction. Furthermore, the dynamic switching makes it easy to attract the user's attention, which prompts the user to trigger the float window for playing the video.

In addition, in embodiments of the present disclosure, the video related to the first video is recommended to the user via the video viewing portal or float window, which provides various ways to play the related video. The second video may be played in the float window, on the playback interface, or in the float window as enlarged, which allows the user to select any one playing way to play the video related to the first video, thereby enriching the form of interaction. The switching fashion between the video viewing portal and the float window can attract the user to watch related videos, thereby increasing the number of views, the times of user visits and the number of daily active users of the video live-streaming platform.

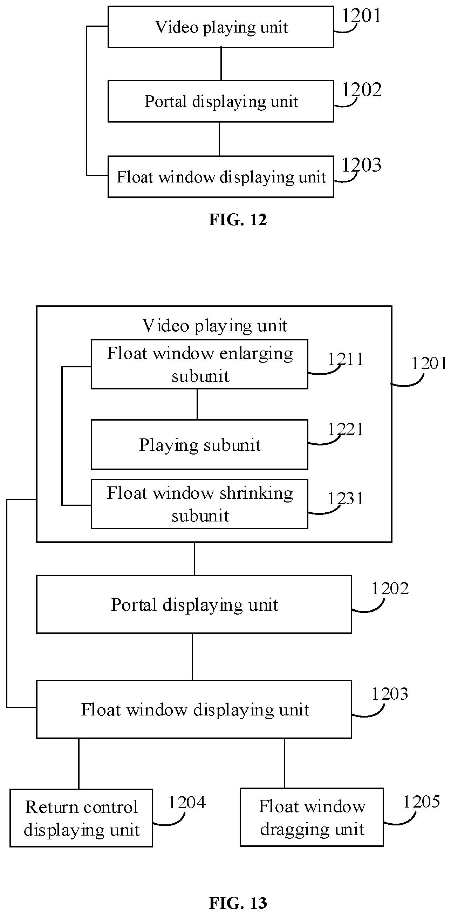

FIG. 12 is a block diagram of an apparatus for playing videos according to some embodiments. Referring to FIG. 12, the apparatus includes:
a video playing unit 1201, configured to play a first video;
a portal displaying unit 1202, configured to display a video viewing portal on a playback interface of the first video, wherein the video viewing portal is configured for viewing of videos related to the first video; and
a float window displaying unit 1203, configured to switch, in response to no trigger operation on the video viewing portal being detected within a first reference duration, the video viewing portal to a float window corresponding to a second video, wherein the second video is related to the first video.

The video playing unit 1201 is further configured to display the second video in response to a trigger operation on the float window.

In the apparatus according to embodiments of the present disclosure, the video viewing portal for viewing the videos related to the first video is displayed firstly during the process of playing the first video. In the case that the user performs no operation on the video viewing portal within the first reference duration, the video viewing portal may be switched to a float window corresponding to the second video related to the first video, such that the second video may be played after the user triggers the float window. Thus, a new form of interaction is provided for the user, which simplifies the process of playing the second video and thereby improves the efficiency of human-computer interaction. In addition, the display fashion of switching between the video viewing portal and the float window provides the user with two ways to view the related video, which is not limited to a single form of interaction. Furthermore, the dynamic switching makes it easy to attract the user's attention, which prompts the user to trigger the float window for playing the video.

In some embodiments, the video playing unit 1201 is further configured to play the second video in the float window in response to a first trigger operation on the float window.

In some embodiments, a plurality of second videos are present, and the video playing unit 1201 is further configured to play the plurality of second videos in turn in the float window in response to the first trigger operation on the float window.

In some embodiments, a plurality of second videos are present, the float window includes a plurality of playback regions, and the video playing unit 1201 is further configured to play one of the second videos in each of the playback regions in response to the first trigger operation on the float window.

In some embodiments, the video playing unit 1201 is further configured to play, in response to a trigger operation on any one playback region, the second video within the playback region as triggered in the float window.

In some embodiments, the video playing unit 1201 is further configured to switch to play the second video from the first video in the playback interface in response to a second trigger operation on the float window.

In some embodiments, the video playing unit 1201 is further configured to switch to play the first video from the second video in the playback interface in response to a trigger operation on a first return control on the playback interface.

In some embodiments, the video playing unit 1201 is further configured to continue to play a next second video in the playback interface in response to a slide operation on the second video as played currently.

In some embodiments, referring to FIG. 13, the apparatus for playing videos further includes:
a return control displaying unit 1204, configured to display a second return control on the playback interface when playing to a last second video among the plurality of second videos.

The video playing unit is further configured to play the first video in the playback interface in response to a trigger operation on the second return control.

In some embodiments, the video playing unit 1201 is further configured to:
play a next video corresponding to the first video in the playback interface in response to a slide operation on the last second video among the plurality of second videos.

In some embodiments, referring to FIG. 13, the video playing unit 1201 further includes:
a float window enlarging subunit 1211, configured to determine, in response to detecting a zoom-in gesture operation on the float window, a size of the float window as enlarged; and
a playing subunit 1221, configured to play the second video in the float window in the case that the size is greater than a reference size.

In some embodiments, referring to FIG. 13, the playing subunit 1221 is further configured to play, in response to a trigger operation on a playback control corresponding to the second video, the second video in the float window in the case that the size is not greater than the reference size.

In some embodiments, referring to FIG. 13, the video playing unit 1201 further includes:
a float window shrinking subunit 1231, configured to shrink, in response to detecting a zoom-out gesture operation on the float window, a size of the float window.

In some embodiments, referring to FIG. 13, the video playing unit 1201 further includes:
a float window shrinking subunit 1231, configured to restore, in response to a trigger operation on a restore control in the float window, the float window to an original size.

In some embodiments, referring to FIG. 13, the apparatus for playing videos further includes:
a float window dragging unit 1205, configured to move, in response to a drag operation on the float window, the float window from a first position to a second position on the playback interface.

In some embodiments, the portal displaying unit 1202 is further configured to switch the float window to the video viewing portal in response to no trigger operation on the float window being detected within a second reference duration.

In some embodiments, the video playing unit 1201 is further configured to switch the first video to a third video in response to the slide operation on the playback interface.

The float window displaying unit 1203 is further configured to display, on the playback interface of the third video, a float window corresponding to a fourth video, wherein the fourth video is related to the third video.

In some embodiments, the video playing unit 1201 is further configured to:
display a related video interface in response to a trigger operation on the video viewing portal is detected, the related video interface including video covers of a plurality of videos related to the first video; and
play, in response to a trigger operation on any one video cover, a video corresponding to the video cover as triggered.

With regard to the apparatus in the aforesaid embodiments, the specific manner in which the respective units perform the operations has been described in detail in embodiments of the method, and will not be explained in detail herein.

In some embodiments of the present disclosure, an electronic device is provided. The electronic device includes one or more processors, and a memory configured to store one or more instructions executable by the one or more processors. The one or more processors, when executing the one or more instructions, are caused to perform the method for playing videos according to the aforesaid embodiments.

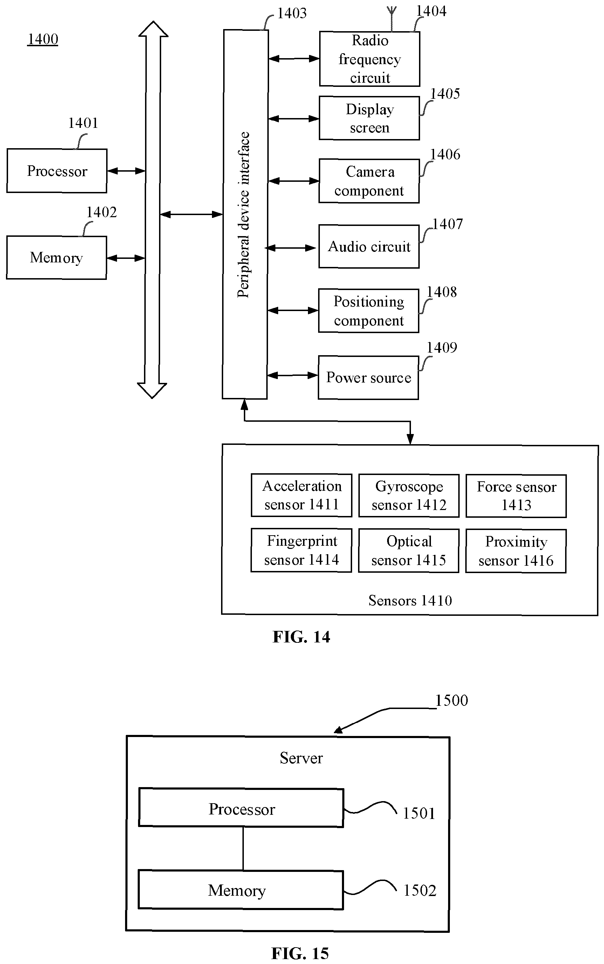

In some possible embodiments, the electronic device is provided as a terminal, FIG. 14 is a structural block diagram of a terminal 1400 according to some embodiments. The terminal 1400 may be portable mobile terminal, such as a smart mobile phone, a tablet computer, a moving picture experts group audio layer III (MP3) player, a moving picture experts group audio layer IV (MP4) player, a laptop or desk computer. The terminal 1400 may also be called User Equipment (UE), a portable terminal, a laptop terminal, a desk terminal, etc.

The terminal 1400 includes a processor 1401 and a memory 1402.

The processor 1401 may include one or more processing cores, such as a 4-core processor, an 8-core processor, and so on. The processor 1401 may be formed by at least one hardware of a digital signal processing (DSP), a field-programmable gate array (FPGA), and a programmable logic array (PLA). The processor 1401 may further include a main processor and a co-processor. The main processor is a processor for processing data in an awake state, and is also called a central processing unit (CPU). The co-processor is a low-power-consumption processor for processing the data in a standby state. In some embodiments, the processor 1401 may be integrated with a graphics processing unit (GPU), and the GPU is configured to render and draw the content to be displayed on the display screen. In some embodiments, the processor 1401 may further include an artificial intelligence (AI) processor, and the AI processor is configured to process calculation operations related to the machine learning.

The memory 1402 may include one or more computer-readable storage media, which may be non-transitory. The memory 1402 may further include a high-speed random-access memory and a non-volatile memory, such as one or more magnetic disk storage devices and flash memory storage devices. In some embodiments, the non-transitory computer-readable storage medium in the memory 1402 is configured to store at least one program code. The at least one program code is configured to be executed by the processor 1401 to implement the method for playing videos according to method embodiments of the present disclosure.

In some embodiments, the terminal 1400 may optionally further include: a peripheral device interface 1403 and at least one peripheral device. The processor 1401, the memory 1402, and the peripheral device interface 1403 may be connected by a bus or a signal line. Respective peripheral devices may be connected to the peripheral device interface 1403 through a bus, a signal line, or a circuit board. Specifically, the peripheral device includes: at least one of a radio frequency circuit 1404, a display screen 1405, a camera component 1406, an audio circuit 1407, a positioning component 1408, and a power source 1409.

The peripheral device interface 1403 may be configured to connect at least one peripheral device associated with an input/output (I/O) to the processor 1401 and the memory 1402. In some embodiments, the processor 1401, the memory 1402, and the peripheral device interface 1403 are integrated on the same chip or circuit board. In some other embodiments, any one or two of the processor 1401, the memory 1402, and the peripheral device interface 1403 may be implemented on a separate chip or circuit board, which is not limited in this embodiment.

The radio frequency circuit 1404 is configured to receive and transmit radio frequency (RF) signals (also called electromagnetic signals). The radio frequency circuit 1404 communicates with a communication network and other communication devices through electromagnetic signals. The radio frequency circuit 1404 converts electrical signals into electromagnetic signals for transmission, or converts received electromagnetic signals into electrical signals. In some embodiments, the radio frequency circuit 1404 includes an antenna system, an RF transceiver, one or more amplifiers, a tuner, an oscillator, a digital signal processor, a codec chipset, a subscriber identity module card, and the like. The radio frequency circuit 1404 may communicate with other terminals through at least one wireless communication protocol. The wireless communication protocol includes but is not limited to: World Wide Web, Metropolitan Area Network, Intranet, various generations of mobile communication networks (2G, 3G, 4G, and 5G), wireless local area network and/or wireless fidelity (WiFi) network. In some embodiments, the radio frequency circuit 1404 may also include a circuit related to near field communication (NFC), which is not limited in the present disclosure.

The display screen 1405 is configured to display a user interface (UI). The UI may include graphics, text, icons, videos, and any combination thereof. When the display screen 1405 is a touch display screen, the display screen 1405 may further have a capacity to collect touch signals on or above a surface of the display screen 1405. The touch signal may be input to the processor 1401 as a control signal for processing. At this point, the display screen 1405 may further be configured to provide virtual buttons and/or virtual keyboards (also called soft buttons and/or soft keyboards). In some embodiments, there may be one display screen 1405, which is provided on a front panel of the terminal 1400. In other embodiments, there may be at least two display screens 1405, which are respectively provided on different surfaces of the terminal 1400 or designed in a folding manner. In still other embodiments, the display screen 1405 may be a flexible display screen, which is provided on a curved surface or a folding surface of the terminal 1400. Furthermore, the display screen 1405 may even be formed as a non-rectangular irregular pattern, and is namely a special-shaped screen. The display screen 1405 may be made of materials such as a liquid crystal display (LCD), an organic light-emitting diode (OLED), etc.

The camera component 1406 is configured to collect images or videos. In some embodiments, the camera component 1406 includes a front camera and a rear camera. The front camera is provided on the front panel of the terminal, and the rear camera is provided on the rear surface of the terminal. In some embodiments, there are at least two rear cameras, which may be one of a main camera, a depth-of-field camera, a wide-angle camera, and a telephoto camera, respectively, to realize the background blur function by fusing the main camera and the depth-of-field camera, and realize the panoramic shooting and the virtual reality (VR) shooting function or other fusion shooting functions by fusing the main camera and the wide-angle camera. In some embodiments, the camera component 1406 may further include a flash. The flash may be a single color temperature flash or a dual color temperature flash. The dual color temperature flash refers to a combination of warm light flash and cold light flash, which may be used for light compensation under different color temperatures.

The audio circuit 1407 may include a microphone and a speaker. The microphone is configured to collect sound waves of the user and the environment, convert the sound waves into an electrical signal, and input the electrical signal to the processor 1401 for processing or input to the radio frequency circuit 1404 to realize voice communication. For the purpose of stereo collection or noise reduction, there may be a plurality of microphones, which are respectively provided in different portions of the terminal 1400. The microphone may also be an array microphone or an omnidirectional acquisition microphone. The speaker is configured to convert the electrical signal from the processor 1401 or the radio frequency circuit 1404 into sound waves. The speaker may be a traditional membrane speaker or a piezoelectric ceramic speaker. When the speaker is a piezoelectric ceramic speaker, it can not only convert the electrical signal into human audible sound waves, but also convert the electrical signal into human inaudible sound waves for distance measurement or other purposes. In some embodiments, the audio circuit 1407 may further include a headphone jack.

The positioning component 1408 is configured to locate the current geographic location of the terminal 1400 to implement navigation or location-based service (LBS). The positioning component 1408 may be the United States' Global Positioning System (GPS), Russia's Global Navigation Satellite System (GLONASS), China's BeiDou Navigation Satellite System (BDS), and the European Union's Galileo Satellite Navigation System (Galileo).

The power source 1409 is configured to power up various components in the terminal 1400. The power source 1409 may be alternating current, direct current, a disposable battery, or a rechargeable battery. When the power supply 1409 includes a rechargeable battery, the rechargeable battery may be a wired rechargeable battery or a wireless rechargeable battery. The wired rechargeable battery is a battery charged through a wired line, and the wireless rechargeable battery is a battery charged through a wireless coil. The rechargeable battery may further be configured to support fast charging technology.

In some embodiments, the terminal 1400 further includes one or more sensors 1410. The one or more sensors 1410 include, but are not limited to, an acceleration sensor 1411, a gyroscope sensor 1412, a force sensor 1413, a fingerprint sensor 1414, an optical sensor 1415, and a proximity sensor 1416.

The acceleration sensor 1411 may detect acceleration on three coordinate axes of the coordinate system established by the terminal 1400. For example, the acceleration sensor 1411 may be configured to detect components of the gravitational acceleration in the three coordinate axes. The processor 1401 may control the display screen 1405 to display the user interface in a horizontal view or a vertical view according to the gravitational acceleration signal collected by the acceleration sensor 1411. The acceleration sensor 1411 may also be configured to collect motion data of a game or the user.

The gyroscope sensor 1412 may detect a body direction and rotation angle of the terminal 1400, and the gyroscope sensor 1412 may cooperate with the acceleration sensor 1411 to collect 3D actions of the user on the terminal 1400. Based on the data collected by the gyroscope sensor 1412, the processor 1401 can serve the following functions: motion sensing (such as changing the UI according to a user's tilt operation), image stabilization during shooting, game control and inertial navigation.

The force sensor 1413 may be provided on a side frame of the terminal 1400 and/or a lower layer of the display screen 1405. When the force sensor 1413 is provided on the side frame of the terminal 1400, a holding signal of the user to the terminal 1400 may be detected, such that the processor 1401 performs left-right hand recognition or quick operation according to the holding signal collected by the force sensor 1413. When the force sensor 1413 is provided at the lower layer of the display screen 1405, the processor 1401 controls an operable control on the UI according to a press operation of the user on the display screen 1405. The operable control includes at least one of a button control, a scroll bar control, an icon control, and a menu control.

The fingerprint sensor 1414 is configured to collect the user's fingerprint. The processor 1401 identifies the user's identity according to the fingerprint collected by the fingerprint sensor 1414, or the fingerprint sensor 1414 identifies the user's identity according to the collected fingerprint. When the user's identity is identified as trusted, the processor 1401 authorizes the user to perform related sensitive operations, such as unlocking the screen, viewing encrypted information, downloading software, paying, and changing settings. The fingerprint sensor 1414 may be provided on a front surface, a back surface or a side surface of the terminal 1400. When a physical button or a manufacturer logo is provided on the terminal 1400, the fingerprint sensor 1414 may be integrated with the physical button or the manufacturer's logo.

The optical sensor 1415 is configured to collect light intensity of the environment. In an embodiment, the processor 1401 may control the display brightness of the display screen 1405 according to the light intensity of the environment collected by the optical sensor 1415. Specifically, when the light intensity of the environment is high, the display brightness of the display screen 1405 is increased; and when the light intensity of the environment is low, the display brightness of the display screen 1405 is decreased. In another embodiment, the processor 1401 may further dynamically adjust the shooting parameters of the camera component 1406 according to the light intensity of the environment collected by the optical sensor 1415.

The proximity sensor 1416, also called a distance sensor, is provided on a front panel of the terminal 1400. The proximity sensor 1416 is configured to capture the distance between the user and the front surface of the terminal 1400. In an embodiment, when the proximity sensor 1416 detects that the distance between the user and the front surface of the terminal 1400 gradually decreases, the processor 1401 may control the display screen 1405 to switch from a screen-on state to a screen-off state. When the proximity sensor 1416 detects that the distance between the user and the front surface of the terminal 1400 gradually increases, the processor 1401 may control the display screen 1405 to switch from the screen-off state to the screen-on state.

It will be understood by those skilled in the art that the structure shown in FIG. 14 does not constitute a limitation to the terminal 1400, and may include more or less components than those illustrated, or combine some components or adopt different component arrangements.

In some embodiments, the electronic device may be provided as a server. FIG. 15 is a structural block diagram of a server according to an embodiment of the present disclosure. Significant differences may be generated when the server 1500 has different configurations or performances. The server 1500 may include more than one processor (CPU) 1501 and more than one memory 1502 stored with at least one piece of program code. The at least one piece of program code, when loaded and executed by the processor 1501, causes the processor 1901 to implement the method for playing videos according to the foregoing method embodiments. The server may further include components such as a wired or wireless network interface, a keyboard, and an input/output interface for input and output, and the server may further include other components for implementing device functions, which is not repeated here.

In some embodiments of the present disclosure, a non-transitory computer-readable storage medium storing one or more instructions therein is provided. The one or more instructions, when executed by a processor of an electronic device, cause the electronic device to perform the method for playing videos as performed by the terminal or server. In some embodiments, the non-transitory computer-readable storage medium may be a read-only memory (ROM), a random-access memory (RAM), a compact disc read-only memory (CD-ROM), a magnetic tape, a floppy disc, an optical data storage device or the like.

In some embodiments, a computer program product is further provided. The computer program product includes a computer program, and the computer program, when run by the processor, causes the processor to perform the method for playing videos.

All embodiments of the disclosure may be implemented alone or in combination with other embodiments and are considered to be within the scope of the disclosure as claimed.

## Claims

1. A method for playing videos, comprising:
playing (201, 301) a first video;
displaying (202, 302) a video viewing portal on a playback interface of the first video, wherein the video viewing portal is configured for viewing of videos related to the first video;
switching (203, 303), in response to not detecting a trigger operation on the video viewing portal being detected within a first reference duration of time, the video viewing portal to a float window corresponding to a second video, wherein the second video is related to the first video; and
playing (204) the second video in response to detecting a trigger operation on the float window.

2. The method according to claim 1, wherein said playing (204) the second video in response to detecting the trigger operation on the float window comprises:
playing (304) the second video in the float window in response to detecting a first trigger operation on the float window.

3. The method according to claim 2, wherein the second video comprises a plurality of second videos; and wherein said playing (304) the second video in the float window in response to detecting the first trigger operation on the float window comprises:
playing the plurality of second videos in turn in the float window in response to detecting the first trigger operation on the float window.

4. The method according to claim 2, wherein the second video comprises a plurality of second videos, wherein the float window comprises a plurality of playback regions, and wherein said playing (304) the second video in the float window in response to detecting the first trigger operation on the float window comprises:
playing one of the second videos in each of the playback regions in response to detecting the first trigger operation on the float window.

5. The method according to claim 4, wherein the method further comprises:
playing, in response to detecting a trigger operation on any playback region on the plurality of playback regions, the second video within the playback region as having been triggered in the float window.

6. The method according to any one of claims 1 to 5, wherein said playing (204) the second video in response to detecting the trigger operation on the float window comprises:
switching (305) to play the second video from the first video in the playback interface in response to detecting a second trigger operation on the float window.

7. The method according to claim 6, wherein the method further comprises:
switching to play the first video from the second video in the playback interface in response to detecting a trigger operation on a first return control on the playback interface.

8. The method according to claim 6, wherein the second video comprises a plurality of second videos, and the method further comprises:
continuing to play a first next video of the plurality of second videos associated with a second video of the plurality of second videos that is currently being played in the playback interface in response to detecting a slide operation on the second video.

9. The method according to claim 8, wherein the method further comprises:
displaying a second return control on the playback interface in response to playing to a last second video of the plurality of second videos; and
playing the first video in the playback interface in response to detecting a trigger operation on the second return control.

10. The method according to claim 8, wherein the method further comprises:
playing a second next video corresponding to the first video in the playback interface in response to detecting a slide operation on a last second video.

11. The method according to any one of claims 1 to 10, wherein said playing the second video in response to detecting the trigger operation on the float window comprises:
determining (306), in response to detecting a zoom-in gesture operation on the float window that enlarges a size of the float window, the size of the float window; and
playing (306) the second video in the float window responsive to the size being greater than a reference size.

12. The method according to claim 11, wherein the method further comprises:
playing, in response to detecting a trigger operation on a playback control corresponding to the second video, the second video in the float window responsive to the size not being greater than the reference size.

13. The method according to claim 11, wherein the method further comprises:
shrinking, in response to detecting a zoom-out gesture operation on the float window, the size of the float window.

14. The method according to any one of claims 11 to 13, wherein the method further comprises:
switching (307) the float window to the video viewing portal in response to not detecting the trigger operation on the float window within a second reference duration of time.

15. An apparatus for playing videos, comprising:
a video playing unit (1201),configured to play a first video;
a portal displaying unit (1202), configured to display a video viewing portal on a playback interface of the first video, wherein the video viewing portal is configured for viewing of videos related to the first video;
a float window displaying unit (1203), configured to switch, in response to not detecting a trigger operation on the video viewing portal being detected within a first reference duration of time, the video viewing portal to a float window corresponding to a second video, wherein the second video is related to the first video; and
the video playing unit (1201), further configured to play the second video in response to detecting a trigger operation on the float window.
